# EUROPÄISCHE PATENTANMELDUNG

(11) **EP 1 629 915 A1**
(43) Veröffentlichungstag der Anmeldung: **01.03.2006**
(21) Anmeldenummer: 04020103.0
(22) Anmeldetag: 25.08.2004
(51) Int. Cl.: B23B 29/24, B23G 5/18, B23G 1/34

(54) **Drehwerkzeughalter zum Mehrkantdrehen und Gewindewirbeln**

(71) Anmelder: Graf, Ernst, 78661 Dietingen (DE)
(72) Erfinder: Graf, Ernst, 78661 Dietingen (DE)
(74) Vertreter: Klocke, Peter

(57) **Zusammenfassung**

Die Erfindung betrifft einen Drehwerkzeughalter (10) zum Mehrkantdrehen, wobei der Drehwerkzeughalter (10) drehend antreibbar ist und mehrere, über den Umfang verteilt angeordnete Schneiden (30) aufweist. Die Erfindung schlägt vor, den Drehwerkzeughalter (10) mit lösbar befestigten Einzelhaltern (22) auszubilden, die Schneidplatten (24) halten. Die Erfindung hat den Vorteil, dass die Anzahl der Schneiden (30) wählbar ist, der Drehwerkzeughalter (10) weist keine konstruktionsbedingte Unwucht auf (Figur 2).

## Beschreibung

Die Erfindung betrifft einen Drehwerkzeughalter zum Mehrkantdrehen und Gewindewirbeln mit den Merkmalen des Oberbegriffs des Anspruchs 1.

Es ist bekannt, Mehrkante durch Drehen mit einem mehrere Schneiden aufweisenden Drehwerkzeug herzustellen. Das Drehwerkzeug wird mit einem ganzzahligen Drehzahlverhältnis und im Gegenlauf zu einem Werkstück drehend angetrieben, so dass die Schneiden des Drehwerkzeugs nacheinander zum Einsatz am Werkstück kommen. Zum Herstellen regelmäßiger Mehrkante sind die Schneiden in Umfangsrichtung äquidistant angeordnet. Das Drehzahlverhältnis von Werkstück und Drehwerkzeug entspricht dem Verhältnis der Anzahl der Schneiden zur Anzahl der herzustellenden Kanten. Zum Herstellen beispielsweise eines Vierkants mit einem vier Schneiden aufweisenden Drehwerkzeug wird das Drehwerkzeug mit gleicher Drehzahl wie das Werkstück angetrieben. Weist das Drehwerkzeug zwei Schneiden auf, wird es mit der doppelten Drehzahl wie das Werkstück angetrieben. Zum Herstellen beispielsweise eines Sechskants mit einem drei Schneiden aufweisenden Drehwerkzeug wird das Drehwerkzeug ebenfalls mit der doppelten Drehzahl wie das Werkstück angetrieben.

Bekannte Drehwerkzeughalter zum Mehrkantdrehen weisen einen Grundkörper auf, an dem beispielsweise Schneidplatten als Drehwerkzeuge lösbar befestigt sind. Der Grundkörper ist beispielsweise ein massiver zylindrischer oder ringförmiger Körper mit Aussparungen, in denen die Schneidplatten passgenau einliegen. Befestigt sind die Schneidplatten beispielsweise mit Schrauben. Ein solcher Drehwerkzeughalter hat den Nachteil, dass die Anzahl der Schneiden durch die Anzahl der Ausnehmungen für die Schneidplatten vorgegeben und somit nicht veränderlich ist. Auch ist es bekannt, mehr Ausnehmungen am Grundkörper vorzusehen als an sich benötigt werden und eine oder mehrere der Ausnehmungen nicht zu benutzen. So können beispielsweise vier Ausnehmungen am Grundkörper vorgesehen werden, von denen drei um jeweils 120° zueinander versetzt und deren vierte in einer Mitte zwischen zwei anderen und damit der dritten Ausnehmung gegenüber angeordnet ist. Der Grundkörper lässt sich dadurch wahlweise mit zwei einander gegenüber liegenden oder mit drei um jeweils 120° zueinander versetzten Schneidplatten bestücken. Ein solcher Drehwerkzeughalter hat jedoch den Nachteil einer Unwucht durch die nicht benutzte/n Ausnehmung/en. Weiterer Nachteil ist, dass ein solcher Drehwerkzeughalter nur für einen einzigen Schneidplattentyp, der in die Ausnehmungen passt, verwendbar ist. Er ist deswegen nur für eine Art des Drehen, beispielsweise Formstechen oder Langdrehen einsetzbar.

Aufgabe der Erfindung ist, einen Drehwerkzeughalter der vorstehend erläuterten Art vorzuschlagen, der unterschiedliche Schneidenzahlen ermöglicht und keine konstruktionsbedingte Unwucht aufweist.

Diese Aufgabe wird erfindungsgemäß durch die Merkmale des Anspruchs 1 gelöst. Der erfindungsgemäße Drehwerkzeughalter weist einen Grundkörper auf, an dem für jedes Drehwerkzeug ein Einzelhalter lösbar befestigt ist. Die Drehwerkzeuge sind also nicht wie im Stand der Technik unmittelbar am Grundkörper, sondern mittelbar über die Einzelhalter am Grundkörper befestigt. Die Anzahl der Einzelhalter stimmt mit der Anzahl der Drehwerkzeuge und damit mit der Schneidenzahl überein. Durch Befestigen einer anderen Anzahl an Einzelhaltern lässt sich die Schneidenzahl ändern. Sofern die Einzelhalter in Umfangsrichtung äquidistant am Grundkörper des Drehwerkzeughalters befestigt sind, wie es an sich vorgesehen ist, ist der Drehwerkzeughalter jedenfalls dann ausgewuchtet, wenn der Grundkörper rotationssymmetrisch ausgeführt ist. Der erfindungsgemäße Drehwerkzeughalter hat somit den Vorteil, dass er unterschiedliche Schneidenzahlen ermöglicht, ohne dass er dadurch eine konstruktiv bedingte Unwucht aufweisen würde. Weiterer Vorteil des erfindungsgemäßen Drehwerkzeughalters ist seine vielseitige Einsetzbarkeit, da durch einen Wechsel der Einzelhalter unterschiedliche Schneidplatten befestigbar sind. Das ermöglicht auch den Einsatz rechts- und linksschneidender Schneidplatten.

Vorzugsweise weist der erfindungsgemäße Drehwerkzeughalter eine Positioniereinrichtung für die Einzelhalter auf, die die Einzelhalter in radialer Richtung am Grundkörper positioniert. Diese Positioniereinrichtung kann beispielsweise eine umlaufende Rillung oder eine umlaufende Nut in einer Stirnfläche des Grundkörpers sein, in die die Einzelhalter mit einer komplementären Rillung oder einem komplementären Vorsprung eingreifen. Die Positioniereinrichtung stellt sicher, dass sich die Schneiden der Drehwerkzeuge auf einem gemeinsamen und zur Drehachse des Grundkörpers konzentrischen Kreis befinden. Diese Ausgestaltung der Erfindung lässt eine in Umfangsrichtung stufenlose Verstellbarkeit der Einzelhalter zu.

Eine Ausgestaltung der Erfindung sieht eine Positioniereinrichtung vor, die die Einzelhalter in Umfangsrichtung am Grundkörper positioniert. Diese Positioniereinrichtung stellt äquidistante Schneiden sicher. Sie kann mit Passschrauben verwirklicht sein. Vorzugsweise positioniert diese Positioniereinrichtung die Einzelhalter in Umfangs- und in radialer Richtung am Grundkörper oder sie ist zusätzlich zu einer radial positionierenden Positioniereinrichtung vorgesehen.

Auch für die Befestigung der Drehwerkzeuge an den Einzelhaltern sieht eine Ausgestaltung der Erfindung Positioniereinrichtungen vor. Hierbei kann es sich beispielsweise um Ausnehmungen an den Einzelhaltern handeln, in denen Schneidplatten passgenau einliegen.

Eine Ausgestaltung der Erfindung sieht vor, dass die Drehwerkzeuge am Drehwerkzeughalter nach innen gerichtet sind. Der Drehwerkzeughalter eignet sich dadurch beispielsweise zum Gewindewirbeln. Zu bedenken ist, dass der Grundkörper unverändert bleibt und lediglich die Einzelhalter ausgetauscht und evtl. mit an den Verwendungszweck angepassten Drehwerkzeugen, beispielsweise mit Gewindeschneidplatten bestückt werden müssen. Der Grundkörper des erfindungsgemäßen Drehwerkzeughalters ist vielseitig verwendbar.

Eine Weiterbildung der Erfindung sieht Abstandshalter vor, die zwischen dem Grundkörper und den Einzelhaltern angeordnet sind. Die Einzelhalter und die Drehwerkzeuge erhalten dadurch einen axialen Abstand vom Grundkörper. Dadurch kann beispielsweise beim Gewindewirbeln eine längeres Gewinde hergestellt werden, ohne dass der an einem Stirnende des Werkstücks befindliche Grundkörper gegen das Werkstück stößt.

Die Erfindung wird nachfolgend anhand in der Zeichnung dargestellter Ausführungsbeispiele näher erläutert. Es zeigen:
- Figuren 1 und 2: ein erstes Ausführungsbeispiel eines erfindungsgemäßen Drehwerkzeughalters in perspektivischer Darstellung;
- Figuren 3 und 4: ein zweites Ausführungsbeispiel eines erfindungsgemäßen Drehwerkzeughalters in perspektivischer Darstellung; und
- Figur 5: ein drittes Ausführungsbeispiel eines erfindungsgemäßen Drehwerkzeughalters in perspektivischer Darstellung.

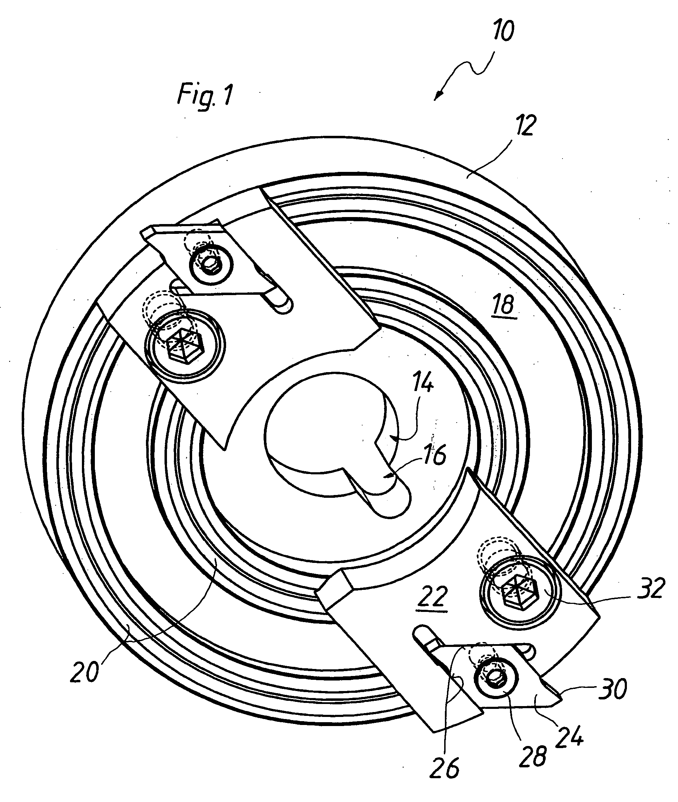

Der in Figur 1 dargestellte, insgesamt mit 10 bezeichnete erfindungsgemäße Drehwerkzeughalter weist einen zylindrischen Grundkörper 12 mit einem koaxialen Durchgangsloch 14 auf. Der Grundkörper 12 kann deshalb auch als kreisringförmig angesehen werden. Das Durchgangsloch 14 ist schlüssellochförmig, d. h. es weist ein zylindrisches, zum Grundkörper 12 koaxiales Loch auf, von dem an einer Umfangsstelle ein Schlitz 16 nach Art eines Schlüsselbarts radial ausgeht.

Das Durchgangsloch 14 dient zum Befestigen des Drehwerkzeughalters 10 auf einer nicht dargestellten Drehmaschine, der Radialschlitz 16 dient einer Drehmomentenübertragung durch Formschluss zum drehenden Antrieb des Drehwerkzeughalters 10.

An einer Stirnseite weist der Grundkörper 12 eine im Querschnitt T-förmige Nut 18 (kurz: T-Nut) auf. Die T-Nut 18 ist umlaufend und koaxial zum Grundkörper 12. Radial innerhalb und außerhalb der T-Nut 18 weist die Stirnseite des Grundkörpers 12 eine umlaufende Rillung mit mehreren, zueinander konzentrischen, kreisförmig verlaufenden Rillen mit einem flachen, dreiecksförmigen Querschnitt auf. Die Rillung 20 bildet eine noch zu erläuternde Positioniereinrichtung.

Auf die die T-Nut 18 aufweisende Stirnseite des Grundkörpers 12 sind Einzelhalter 22 mit Schneidplatten 24 aufgesetzt, wobei die Schneidplatten 24 Drehwerkzeuge bilden. Die Einzelhalter 22 sind identisch, sie weisen einen rechteckigen Querschnitt auf, ihre radial inneren und äußeren Stirnseiten sind einer Zylinderform des Grundkörpers 12 entsprechend gerundet. Jeder Einzelhalter 22 weist eine Ausnehmung 26 auf, in der eine Schneidplatte 24 passgenau einliegt. Die Ausnehmung 26 bildet eine Positioniereinrichtung für die jeweilige Schneidplatte 24. Jede Schneidplatte 24 ist mit einer Schraube 28 in der Ausnehmung 26 des jeweiligen Einzelhalters 22 befestigt. Im dargestellten und beschriebenen Ausführungsbeispiel der Erfindung werden rautenförmige Schneidplatten 24 verwendet, andere, beispielsweise dreieckige Schneidplatten 24 (nicht dargestellt) sind ebenso möglich.

Eine dem Grundkörper 12 zugewandte Unterseite der Einzelhalter 22 weist eine zur Rillung 20 des Grundkörpers 12 komplementäre Rillung auf, die die Einzelhalter 22 in radialer Richtung am Grundkörper 12 positioniert. Die miteinander zusammenwirkenden Rillungen der Einzelhalter 22 und des Grundkörpers 12 bilden eine Positioniereinrichtung, die die Einzelhalter 22 in radialer Richtung am Grundkörper 12 positionieren. Es ist sichergestellt, dass Schneiden 30 der Schneidplatten 24 den gleichen radialen Abstand von einer gedachten Drehachse des Drehwerkzeughalters 10 aufweisen, d. h. die Schneiden 30 befinden sich auf einem zum Grundkörper 12 konzentrischen, gedachten Kreis.

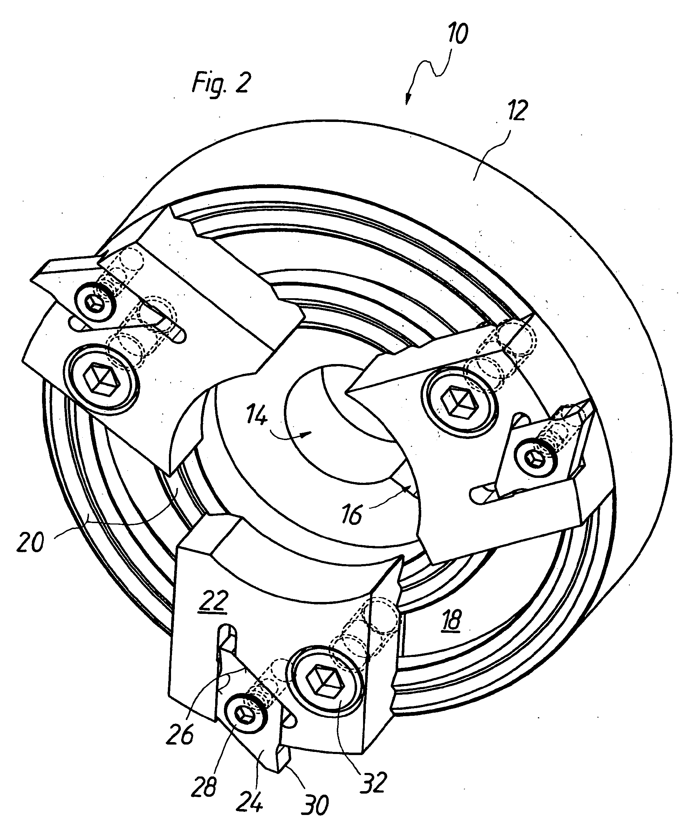

Zur Befestigung der Einzelhalter 22 am Grundkörper 12 sind in der Zeichnung nicht sichtbare, an sich bekannte T-Nutensteine in die T-Nut 18 eingesetzt. Die T-Nutensteine sind in Längsrichtung der T-Nut 18 verschiebbar und hintergreifen die T-Nut 18 formschlüssig. Mit Schrauben 34, die in die T-Nutensteine eingeschraubt sind, sind die Einzelhalter 22 am Grundkörper 12 befestigt. Die Einzelhalter 22 lassen sich nach Lockern der Schrauben 34 in Umfangsrichtung verschieben, die Einzelhalter 22 lassen sich stufenlos an jeder Stelle des Umfangs des Grundkörpers 12 befestigen. Dadurch ist es möglich, den Grundkörper 12 und damit den Drehwerkzeughalter 10 mit einer gewünschten Anzahl Einzelhalter 22 zu bestücken. Eine Schneidenhöhe der Schneidplatten 24 ist einstellbar, wodurch eine hohe Drehgenauigkeit erzielt wird. Figur 1 zeigt den Drehwerkzeughalter 10 mit zwei und Figur 2 mit drei Einzelhaltern 22 bestückt. Die Anzahl der Schneiden 30 des Drehwerkzeughalters 10 ist dadurch wählbar.

Zum Drehen beispielsweise eines Vierkants wird der Drehwerkzeughalter 10 wie in Figur 2 dargestellt mit zwei Einzelhaltern 22 bestückt und mit doppelter Drehzahl wie ein nicht dargestelltes Werkstück im Gegenlauf drehend angetrieben. Wahlweise kann der Drehwerkzeughalter 10 auch mit vier Einzelhaltern 22 bestückt werden (nicht dargestellt) und mit gleicher Drehzahl wie das Werkstück angetrieben werden. Zum Drehen eines Sechskants wird der Drehwerkzeughalter 10 wie in Figur 2 dargestellt mit drei Einzelhaltern 22 bestückt und mit doppelter Drehzahl wie ein nicht dargestelltes Werkstück im Gegenlauf drehend angetrieben. Auch hier ist es möglich, den Drehwerkzeughalter 10 mit sechs Einzelhaltern 22 zu bestücken (nicht dargestellt) und mit gleicher Drehzahl wie das Werkstück drehend anzutreiben. Diese Art des Drehens von Mehrkanten mit einem drehend angetriebenen, mehrere über den Umfang verteilt angeordnete Schneiden aufweisenden Drehwerkzeug ist an sich bekannt und soll an dieser Stelle nicht näher erläutert werden. Der erfindungsgemäße Drehwerkzeughalter 10 ermöglicht außer gängigen Schneidenzahlen von zwei, drei und vier auch ungewöhnliche Schneidenzahlen wie beispielsweise fünf.

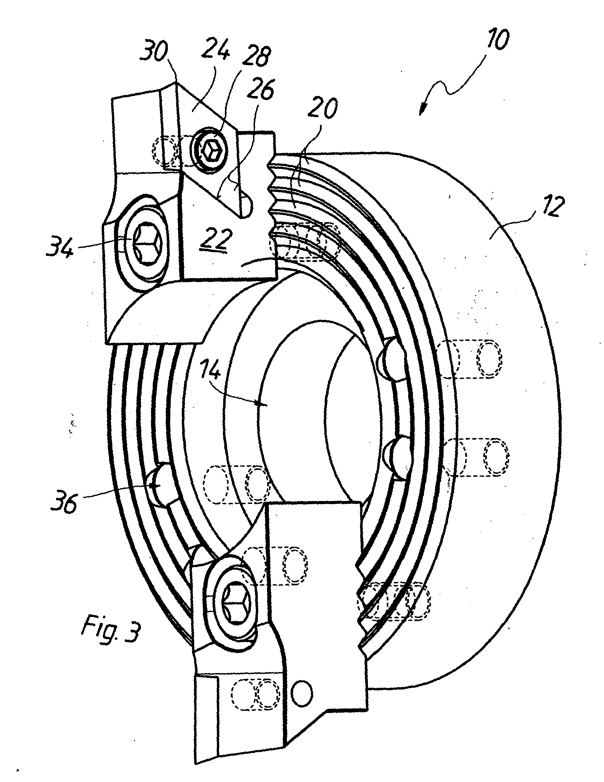

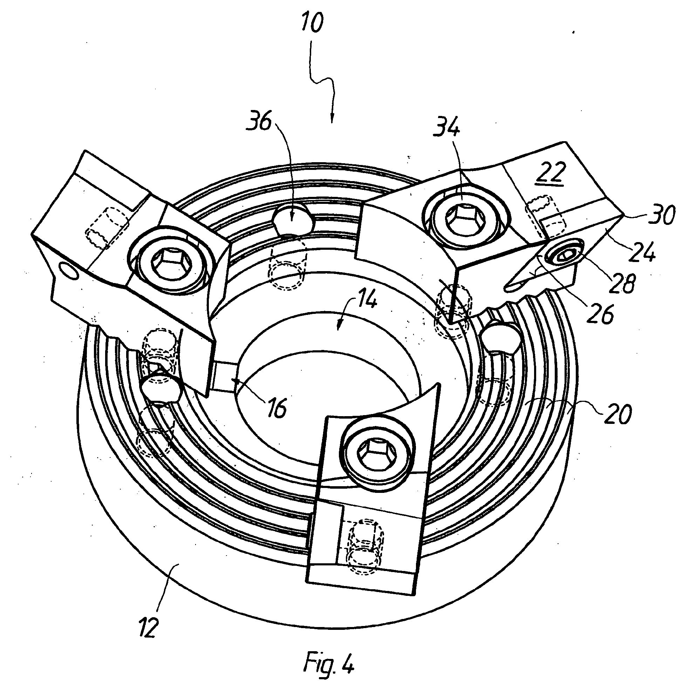

Der in Figuren 3 und 4 dargestellte erfindungsgemäße Drehwerkzeughalter 10 weist ebenso wie der in Figuren 1 und 2 dargestellte Drehwerkzeughalter 10 einen zylindrischen Grundkörper 12 mit einem koaxialen, schlüssellochförmigen Durchgangsloch 14 auf. Im Unterschied zu dem in Figuren 1 und 2 dargestellten Drehwerkzeughalter 10 weist der Grundkörper 12 des Drehwerkzeughalters 10 aus Figuren 3 und 4 keine T-Nut 18, sondern nur die Rillung 20 auf seiner einen Stirnseite auf. Die Befestigung der Einzelhalter 22 erfolgt mit Passschrauben 34, die in Gewindelöcher 36 im Grundkörper 12 eingeschraubt sind. Die Gewindelöcher 36 weisen geriebene, gewindelose Lochabschnitte an ihren Mündungen auf, ebenso wie die Einzelhalter 22. In den gewindelosen Lochabschnitten befindet sich ein gewindeloser Schaftabschnitt der Passschrauben 34, der die Einzelhalter 22 mit hoher Genauigkeit am Grundkörper 12 positioniert. Diese Art der Positionierung mit Passschrauben 34 ist an sich bekannt. Die mit den Gewindelöchern 36 und den Löchern in den Einzelhaltern 22 zusammenwirkenden Passschrauben 34 bilden eine Positioniereinrichtung, die die Einzelhalter 22 in radialer und in Umfangsrichtung am Grundkörper 12 positioniert. In radialer Richtung werden die Einzelhalter 22 zusätzlich durch die Rillung 20 des Grundkörpers 12 und die komplementäre Rillung der Einzelhalter 22 positioniert. Der Grundkörper 12 des Drehwerkzeughalters 10 ist so mit Gewindelöchern 36 versehen, dass er sich mit einer unterschiedlichen Anzahl von Einzelhaltern 22 bestücken lässt. Figur 3 zeigt den Drehwerkzeughalter 10 mit zwei und Figur 4 mit drei Einzelhaltern 22 bestückt. Eine Bestückung mit vier Einzelhaltern 22 ist ebenfalls möglich (nicht dargestellt), eine Bestückung mit beispielsweise fünf, sechs oder auch mehr Einzelhaltern ist im Ausführungsbeispiel nicht vorgesehen, allerdings grundsätzlich möglich.

Mit Ausnahme der erläuterten Unterschiede ist der Drehwerkzeughalter 10 aus Figuren 3 und 4 übereinstimmend mit dem Drehwerkzeughalter 10 aus Figuren 1 und 2 ausgebildet, es wird insoweit auf die obenstehenden Erläuterungen zu Figuren 1 und 2 verwiesen.

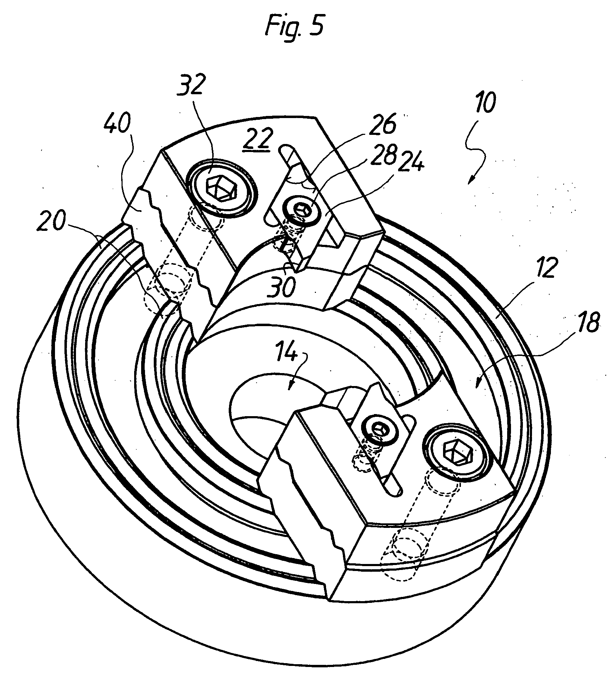

Bei dem in Figur 5 dargestellten, erfindungsgemäßen Drehwerkzeughalter 10 ist der gleiche Grundkörper 2 verwendet wie bei dem oben beschriebenen Drehwerkzeughalter 10 aus Figuren 1 und 2 mit der T-Nut zur Befestigung der Einzelhalter 22. Die Einzelhalter 22 sind gewechselt gegen Einzelhalter 22, bei denen sich die Ausnehmungen 26 für die Schneidplatten 24 innen befinden. Dabei bezieht sich innen auf den Grundkörper 12, die Schneidplatten weisen in Richtung der gedachten Drehachse des Drehwerkzeughalters 10. Der Drehwerkzeughalter 10 eignet sich dadurch zum Gewindewirbeln.

Außerdem sind bei dem in Figur 5 dargestellten Drehwerkzeughalter 10 Abstandshalter 40 zwischen dem Grundkörper 12 und den Einzelhaltern 22 auf der die T-Nut aufweisenden Stirnseite des Grundkörpers 12 angeordnet. Die Abstandshalter 40 sind deckungsgleich (das ist nicht zwingend) mit den Einzelhaltern 22 und können eine andere Dicke haben als die Einzelhalter 22. Die Abstandshalter 40 bewirken einen Abstand der Einzelhalter 22 von der Stirneseite des Grundkörpers 12 in achsparalleler Richtung, sie vergrößern einen Abstand der Schneiden 30 der Schneidplatten 24 vom Grundkörper 12 in achsparalleler Richtung. Dadurch können längere Gewinde hergestellt werden, ohne dass ein Werkstück gegen den Grundkörper 12 stößt, der sich beim Gewindewirbein an einem Stirnende des Werkstücks befindet. Ist der Abstand der Schneiden 30 vom Grundkörper 12 ausreichend, können die Abstandshalter 40 weggelassen werden. Für einen größeren Abstand werden dickere oder mehrere aufeinander gesetzte Abstandshalter 40 verwendet (nicht dargestellt).

Zur radialen Positionierung weisen die Abstandshalter 40 zu den Rillungen 20 des Grundkörpers 12 und der Einzelhalter 22 der komplementäre Rillungen auf. Ergänzend werden zur Erläuterung von Figur 5 die Ausführungen zu Figuren 1 und 2 in Bezug genommen. Auch an dem in Figuren 3 und 4 gezeigten Grundkörper 12 sind Einzelhalter 22 mit nach innen gerichteten Schneidplatten 24 befestigbar (nicht dargestellt), diese Ausgestaltung der Erfindung ist nicht auf Figuren 1 und 2 beschränkt.

## Patentansprüche

1. Drehwerkzeughalter zum Mehrkantdrehen, wobei der Drehwerkzeughalter (10) mehrere übereinstimmende Drehwerkzeuge (24) aufweist, die lösbar am Drehwerkzeughalter (10) befestigt sind und deren Schneiden (30) sich auf einem gedachten, zu einer gedachten Drehachse des Drehwerkzeughalters (10) konzentrischen Kreis befinden, **dadurch gekennzeichnet, dass** der Drehwerkzeughalter (10) einen Grundkörper (12) aufweist, an dem eine der Anzahl der Drehwerkzeuge (24) entsprechende Anzahl übereinstimmender Einzelhalter (22) lösbar befestigt sind, an denen die Drehwerkzeuge (24) lösbar befestigt sind.

2. Drehwerkzeughalter nach Anspruch 1, **dadurch gekennzeichnet, dass** der Drehwerkzeughalter (10) eine Positioniereinrichtung (20; 34, 36) für die Einzelhalter (22) aufweist, die die Einzelhalter (22) in radialer Richtung am Grundkörper (12) positioniert.

3. Drehwerkzeughalter nach Anspruch 1 oder 2, **dadurch gekennzeichnet, dass** der Drehwerkzeughalter (10) eine Positioniereinrichtung (20; 34, 36) für die Einzelhalter (22) aufweist, die die Einzelhalter (22) in Umfangsrichtung am Grundkörper (12) positioniert.

4. Drehwerkzeughalter nach einem der Ansprüche 1 bis 3, **dadurch gekennzeichnet, dass** die Einzelhalter (22) eine Positioniereinrichtung (26) für die Drehwerkzeuge (24) aufweist, die die Drehwerkzeuge (24) an den Einzelhaltern (22) positionieren.

5. Drehwerkzeughalter nach einem der vorhergehenden Ansprüche, **dadurch gekennzeichnet, dass** die Drehwerkzeuge (24) nach innen gerichtet sind.

6. Drehwerkzeughalter nach Anspruch 5, **dadurch gekennzeichnet, dass** der Drehwerkzeughalter (10) Abstandshalter (40) aufweist, die zwischen dem Grundkörper (12) und den Einzelhaltern (22) angeordnet sind und die einen Abstand der Einzelhalter (22) vom Grundkörper (12) in achsparalleler Richtung bewirken.
